# EUROPÄISCHE PATENTSCHRIFT

(11) **EP 3 241 787 B1**
(45) Veröffentlichungstag und Bekanntmachung des Hinweises auf die Patenterteilung: **27.05.2020**
(21) Anmeldenummer: 17157640.8
(22) Anmeldetag: 23.02.2017
(51) Int. Cl.: B65G 47/52, E04H 6/34, E04H 6/20

(54) **HORIZONTAL-FÖRDEREINRICHTUNG SOWIE ZUGEHÖRIGE PALETTE ZUM PARKEN VON FAHRZEUGEN**
HORIZONTAL CONVEYING EQUIPMENT AND PALLET THEREFORE FOR THE PARKING OF MOTOR VEHICLES
SYSTÈME DE CONVOYEUR HORIZONTAL ET PALETTE ASSOCIEE POUR LE PARCAGE DE VEHICULES

(30) Priorität: 05.04.2016 DE 102016205606
(43) Veröffentlichungstag der Anmeldung: 08.11.2017
(73) Patentinhaber: SATEG Steuerungs- und Automatisierungstechnik GmbH, 66822 Lebach (DE)
(72) Erfinder: QUAK, Andreas, 53539 Borler (DE)
(74) Vertreter: Rau, Schneck & Hübner Patentanwälte Rechtsanwälte PartGmbB

(56) Entgegenhaltungen:
- AT-B- 243 692
- DE-A1- 3 823 728
- DE-A1- 4 302 429
- DE-A1- 19 858 521

## Beschreibung

Die Erfindung betrifft eine Horizontal-Fördereinrichtung zum Tragen und Fördern einer Palette zum Parken eines Fahrzeuges gemäß dem Oberbegriff des Anspruchs 1. Ferner betrifft die Erfindung eine Palette für eine derartige Horizontal-Fördereinrichtung gemäß dem Oberbegriff des Anspruchs 10. Weiterhin betrifft die Erfindung eine Vorrichtung zum Parken von Fahrzeugen mit einer derartigen Horizontal-Fördereinrichtung und einer Palette.

Aus der DE 38 23 728 A1 (entspricht US 5 066 187 A) ist eine Vorrichtung zum automatischen Parken von Kraftfahrzeugen bekannt, die auf zwei übereinander angeordneten Parkebenen eine Vielzahl von in einer x- und einer y-Richtung nebeneinander angeordneten Horizontal-Fördereinrichtungen aufweist. Mittels der Horizontal-Fördereinrichtungen werden Paletten, auf denen Kraftfahrzeuge geparkt sind, je nach Bedarf in der x- oder der y-Richtung gefördert. Die Horizontal-Fördereinrichtungen weisen zylinderförmige Rollen auf, die drehangetrieben sind und so die jeweils darauf angeordnete Palette fördern. Zur Führung sind an einer Unterseite der jeweiligen Palette im Querschnitt trapezförmige Führungsnuten ausgebildet, in denen die Rollen gegen die jeweilige Palette anliegen.

Aus der AT 243 692 B ist eine Vorrichtung zum automatischen Parken von Kraftfahrzeugen bekannt. Die Vorrichtung umfasst Horizontal-Fördereinrichtungen zum Fördern von Paletten bzw. Abstellplattformen in einer horizontalen Richtung zu einem Transportwagen. Die Abstellplattformen weisen Rippen auf, die zur seitlichen Führung der Abstellplattformen in entsprechenden Nuten der Tragrollen der Horizontal-Fördereinrichtung dienen. DE19858521A1 offenbart eine Rolle mit seitlich geneigten Führungsflächen gemäß dem Stand der Technik.

Der Erfindung liegt die Aufgabe zugrunde, eine verschleiß- und wartungsarme Horizontal-Fördereinrichtung zu schaffen, die in einfacher Weise ein schnelles und energieeffizientes Fördern einer Palette ermöglicht.

Diese Aufgabe wird durch eine Horizontal-Fördereinrichtung mit den Merkmalen des Anspruchs 1 gelöst. Dadurch, dass die Rollen jeweils einen Führungsabschnitt und mindestens einen seitlich des Führungsabschnitts angeordneten Abrollabschnitt aufweisen, wird das Führen der Palette funktional entkoppelt von dem Fördern und Tragen der Palette. Hierdurch kann der Führungsabschnitt auf das Führen der Palette und der mindestens eine Abrollabschnitt auf das Tragen und Fördern der Palette optimiert werden, sodass der Verschleiß der Horizontal-Fördereinrichtung erheblich reduziert wird. Die Optimierung des Führungsabschnitts und des mindestens einen Abrollabschnitts auf das Führen einerseits und das Tragen und Fördern andererseits ermöglicht zudem ein schnelleres und energieeffizientes Fördern der Palette. Der Führungsabschnitt weist beispielsweise eine um die Drehachse der jeweiligen Rolle umlaufende Nut oder einen umlaufender Vorsprung auf. Der seitlich davon angeordnete mindestens eine Abrollabschnitt ist zum Tragen und Fördern der Palette zylinderförmig ausgebildet und erzeugt für ein schlupffreies Fördern eine hohe Haftreibung.

Das Kunststoffmaterial an der Lauffläche ermöglicht einerseits eine im Wesentlichen schlupffreie Kraftübertragung auf eine zu fördernde Palette und andererseits einen geringen Verschleiß. Das Kunststoffmaterial führt insbesondere zu einem niedrigen Geräuschpegel beim Transport einer Palette mittels der Horizontal-Fördereinrichtung. Das Kunststoffmaterial ist insbesondere ein elastomeres Kunststoffmaterial. Vorzugsweise ist das Kunststoffmaterial ein Polyurethan-Elastomer. Durch die im Wesentlichen schlupffreie Kraftübertragung ist insbesondere ein schnelles und energieeffizientes Beschleunigen und Abbremsen einer Palette möglich, insbesondere wenn auf der Palette ein Fahrzeug geparkt ist. Die mindestens zwei Führungswände bilden die Führungsflächen aus. Die metallische Ausbildung der Führungsflächen gewährleistet ein verschleißarmes, schnelles und energieeffizientes Fördern der Palette. Da der Führungsabschnitt ausschließlich zum Führen einer Palette dient und nicht auch zum Fördern, können die Führungsflächen auf eine verschleißarme Führung optimiert werden. Das metallische Material ist beispielsweise ein Stahl, insbesondere ein korrosionsbeständiger Stahl. Der Führungsabschnitt ist beispielsweise verschleißfester ausgebildet als ein Gegen-Führungsabschnitt einer Palette, da die Wartung einer Palette vergleichsweise einfacher möglich ist als die Wartung einer Horizontal-Fördereinrichtung. Die mindestens zwei Führungswände gewährleisten in einfacher Weise ein schnelles Fördern einer Palette. Durch die mindestens zwei in dem Winkel α zueinander verlaufender Führungswände wird in einfacher und zuverlässiger Weise eine Selbstzentrierung einer zu fördernden Palette ermöglicht. Zudem stellen die mindestens zwei Führungswände aufgrund des Winkels α vergleichsweise größere Führungsflächen bereit, sodass auftretende Seitenkräfte in Folge der Selbstzentrierung einer Palette zu einer geringeren Belastung und einem geringeren Verschleiß führen. Weiterhin ermöglichen die mindestens zwei Führungswände aufgrund des Winkels α bei der Selbstzentrierung einer Palette ein seitliches Spiel, sodass auftretende Spitzenbelastungen bei der Selbstzentrierung und somit der Verschleiß reduziert werden.

Die Horizontal-Fördereinrichtung ist beispielsweise als Quer-Fördereinrichtung, Längs-Fördereinrichtung oder Quer-und-Längs-Fördereinrichtung ausgebildet. Die Quer-Fördereinrichtung ermöglicht ausschließlich ein Fördern der Palette in einer Quer-Förderrichtung, wohingegen die Längs-Fördereinrichtung ausschließlich ein Fördern der Palette in einer Längs-Förderrichtung ermöglicht. Die Quer-und-Längs-Fördereinrichtung ermöglicht demgegenüber ein Fördern der Palette in der Quer-Förderrichtung und der Längs-Förderrichtung.

Eine Horizontal-Fördereinrichtung nach Anspruch 2 gewährleistet in einfacher Weise ein verschleißarmes und schnelles Fördern einer Palette. Dadurch, dass beidseitig des Führungsabschnitts ein zylinderförmiger Abrollabschnitt angeordnet ist, ist das Gewicht der Palette und eines darauf geparkten Fahrzeugs gleichmäßiger entlang der Drehachse der jeweiligen Rolle verteilt. Hierdurch wird der Verschleiß der Rollen minimiert. Zudem wird ein schnelleres Fördern ermöglicht.

Eine Horizontal-Fördereinrichtung nach Anspruch 3 gewährleistet einen geringen Verschleiß der Rollen. Der an dem Grundkörper drehfest angeordnete Ring bildet eine Lauffläche für eine Palette aus. Dadurch, dass der Ring separat von dem Grundkörper ausgebildet ist, kann das Material des Rings unabhängig von dem Grundkörper so gewählt werden, dass der Ring verschleißarm ist und eine möglichst schlupffreie Kraftübertragung auf eine zu fördernde Palette ermöglicht. Der Ring ist beispielsweise auswechselbar an dem Grundkörper angeordnet. Hierdurch kann der Ring bei Bedarf ausgewechselt werden, ohne dass die jeweilige Rolle vollständig ersetzt werden muss. Der Grundkörper bildet vorzugsweise den Führungsabschnitt aus. Beispielsweise wird der Führungsabschnitt durch einen Mittelabschnitt des Grundkörpers gebildet, sodass beidseitig des Führungsabschnitts ein Ring an dem Grundkörper angeordnet ist.

Eine Horizontal-Fördereinrichtung nach Anspruch 4 gewährleistet ein verschleißarmes, schnelles und energieeffizientes Fördern einer Palette. Das Kunststoffmaterial bzw. das elastomere Kunststoffmaterial an der Lauffläche ermöglicht einerseits eine im Wesentlichen schlupffreie Kraftübertragung auf eine zu fördernde Palette und andererseits einen geringen Verschleiß. Vorzugsweise ist das Kunststoffmaterial ein Polyurethan-Elastomer. Vorzugsweise ist der gesamte Ring aus dem Kunststoffmaterial bzw. elastomeren Kunststoffmaterial.

Eine Horizontal-Fördereinrichtung nach Anspruch 5 gewährleistet ein verschleißarmes, schnelles und energieeffizientes Fördern einer Palette. Die Härte der Lauffläche gewährleistet einerseits eine im Wesentlichen schlupffreie Kraftübertragung auf eine zu fördernde Palette und andererseits einen geringen Verschleiß.

Eine Horizontal-Fördereinrichtung nach Anspruch 6 gewährleistet ein verschleißarmes, schnelles und energieeffizientes Fördern einer Palette. Durch die Breite B_{A} des mindestens einen Abrollabschnitts wird einerseits gewährleistet, dass der mindestens eine Abrollabschnitt zur Kraftübertragung auf eine Palette und zum Tragen einer Palette und eines darauf geparkten Fahrzeugs ausreichend groß ist. Andererseits wird durch die Breite B_{A} gewährleistet, dass der mindestens eine Abrollabschnitt nicht zu groß ist und deshalb unnötig Reibung und Verschleiß erzeugt.

Eine Horizontal-Fördereinrichtung nach Anspruch 7 ermöglicht in einfacher Weise eine verschleißarme Führung einer Palette. Das Führungsprofil verhindert eine Bewegung einer zu fördernden Palette quer zu der Förderrichtung. Die zu fördernde Palette wird durch die Aufnahme eines dem Führungsprofil entsprechend negativ geformten Gegenprofils einfach und sicher geführt. Das Führungsprofil ist beispielsweise durch eine umlaufende Nut oder einen umlaufenden Vorsprung ausgebildet. Vorzugsweise verjüngt sich das Führungsprofil. Hierdurch wird in einfacher Weise eine Selbstzentrierung einer zu fördernden Palette ermöglicht.

Eine Horizontal-Fördereinrichtung nach Anspruch 8 gewährleistet in einfacher Weise ein schnelles Fördern einer Palette. Durch die mindestens zwei in dem Winkel α zueinander verlaufenden Führungswände wird in einfacher und zuverlässiger Weise eine Selbstzentrierung einer zu fördernden Palette ermöglicht. Durch den Winkel α ist die Selbstzentrierungswirkung und die hierbei auftretenden Belastungen einstellbar.

Eine Horizontal-Fördereinrichtung nach Anspruch 9 gewährleistet ein energieeffizientes Fördern einer Palette. Durch die umlaufende Nut weisen die Rollen ein vergleichsweise geringes Trägheitsmoment auf. Aufgrund des häufigen Beschleunigens und Abbremsens der Rollen im Betrieb ist die Horizontal-Fördereinrichtung hierdurch vergleichsweise energieeffizient.

Der Erfindung liegt ferner die Aufgabe zugrunde, eine verschleiß- und wartungsarme Palette für eine Horizontal-Fördereinrichtung zu schaffen, die in einfacher Weise ein schnelles und energieeffizientes Fördern ermöglicht.

Diese Aufgabe wird durch eine Palette mit den Merkmalen des Anspruchs 10 gelöst. Die mindestens zwei Führungselemente sind separat von dem Tragelement ausgebildet und an dem Tragelement befestigt. Hierdurch können die mindestens zwei Führungselemente und das Tragelement unabhängig voneinander hinsichtlich ihrer Eigenschaften optimiert werden. Die mindestens zwei Führungselemente werden hinsichtlich des Verschleißes optimiert, wohingegen das Tragelement hinsichtlich des Gewichts optimiert wird. Durch die mindestens zwei Führungselemente ist die Palette verschleiß- und wartungsarm. Das gewichtsoptimierte Tragelement ermöglicht ein schnelles und energieeffizientes Fördern der Palette. Beim Fördern der Palette wirkt der Gegen-Führungsabschnitt und der mindestens eine Gegen-Abrollabschnitt des jeweiligen Führungselements mit dem Führungsabschnitt und dem mindestens einen Abrollabschnitt der zugehörigen Rollen der Horizontal-Fördereinrichtung zusammen. Der Gegen-Führungsabschnitt verläuft insbesondere geradlinig in der Förderrichtung. Für den Winkel α' gilt vorzugsweise: 30° ≤ α' ≤ 150°, und insbesondere 60° ≤ α' ≤ 120°. Durch den Winkel α' ist die Selbstzentrierungswirkung und die hierbei auftretenden Belastungen auf den Gegen-Führungsabschnitt der jeweiligen Palette und den mindestens einen Führungsabschnitt der jeweiligen Rolle der Horizontal-Fördereinrichtung einstellbar.

Eine Palette nach Anspruch 11 gewährleistet ein verschleißarmes und schnelles Fördern.

Eine Palette nach Anspruch 12 gewährleistet ein verschleißarmes und schnelles Fördern. Durch das Gegenprofil wird eine Bewegung der Palette quer zu der Förderrichtung verhindert, sodass das Gegenprofil zusammen mit dem Führungsprofil der Rollen eine Selbstzentrierungswirkung hat. Das Gegenprofil ist beispielsweise durch einen in der Förderrichtung verlaufenden Vorsprung oder eine in der Förderrichtung verlaufende Nut ausgebildet.

Eine Palette nach Anspruch 13 gewährleistet ein verschleißarmes Fördern. Das metallische Material ist beispielsweise ein Stahl, insbesondere ein korrosionsbeständiger Stahl.

Eine Palette nach Anspruch 14 gewährleistet in einfacher Weise ein verschleißarmes und schnelles Fördern. Vorzugsweise weist die Palette zwei Quer-Führungselemente auf, die in einer Längs-Förderrichtung beabstandet an dem Tragelement befestigt sind, und zwei Längs-Führungselemente, die in einer Quer-Förderrichtung beabstandet an dem Tragelement befestigt sind. Die Gegen-Führungsabschnitte der Quer-Führungselemente sind derart ausgebildet, dass ein Fördern in der Längs-Förderrichtung nicht beeinträchtigt wird. Weiterhin sind die Gegen-Führungsabschnitte der Längs-Führungselemente derart ausgebildet, dass ein Fördern in der Quer-Förderrichtung nicht beeinträchtigt wird.

Der Erfindung liegt die Aufgabe zugrunde, eine verschleiß- und wartungsarme Vorrichtung zum Parken von Fahrzeugen zu schaffen, die in einfacher Weise ein schnelles und energieeffizientes Ein- und Ausparken von Fahrzeugen ermöglicht.

Diese Aufgabe wird durch eine Vorrichtung mit den Merkmalen des Anspruchs 15 gelöst. Vorzugsweise weist die Vorrichtung eine Vielzahl von in einer Ebene angeordneten Horizontal-Fördereinrichtungen auf, mittels denen Paletten von einer Horizontal-Fördereinrichtung zu mindestens einer benachbarten Horizontal-Fördereinrichtung förderbar sind. Die Anzahl der Paletten ist hierbei kleiner als die Anzahl der Horizontal-Fördereinrichtungen, sodass mindestens eine Horizontal-Fördereinrichtung zur Aufnahme einer Palette frei ist. Vorzugsweise sind die Horizontal-Fördereinrichtungen in mehreren übereinander angeordneten Ebenen angeordnet und mittels einer Vertikal-Horizontal-Fördereinrichtung miteinander verbunden. Die Vorrichtung weist vorzugsweise eine Dreh-Horizontal-Fördereinrichtung auf. Die Dreh-Horizontal-Fördereinrichtung ist insbesondere eingangsseitig oder ausgangseitig der Vorrichtung angeordnet, sodass das jeweilige Fahrzeug in der Fahrtrichtung ausparkbar ist. Die mindestens eine Palette kann insbesondere auch mit mindestens einem Merkmal der Ansprüche 10 bis 14 weitergebildet werden.

Weitere Merkmale, Vorteile und Einzelheiten der Erfindung ergeben sich aus der nachfolgenden Beschreibung mehrerer Ausführungsbeispiele. Es zeigen:
- Fig. 1: eine Teilansicht einer Vorrichtung zum Parken von Fahrzeugen mit einer Horizontal-Fördereinrichtung und einer darauf angeordneten Palette,
- Fig. 2: eine perspektivische Ansicht einer als Quer-und-Längs-Fördereinrichtung ausgebildeten Horizontal-Fördereinrichtung gemäß einem ersten Ausführungsbeispiel,
- Fig. 3: eine perspektivische Ansicht einer als Längs-Fördereinrichtung ausgebildeten Horizontal-Fördereinrichtung gemäß einem zweiten Ausführungsbeispiel,
- Fig. 4: eine perspektivische Ansicht einer als Quer-Fördereinrichtung ausgebildeten Horizontal-Fördereinrichtung gemäß einem dritten Ausführungsbeispiel,
- Fig. 5: einen Axialschnitt durch eine Rolle der Horizontal-Fördereinrichtungen gemäß den Fig. 1 bis 4,
- Fig. 6: eine Draufsicht auf eine mittels der Horizontal-Fördereinrichtungen gemäß den Fig. 1 bis 4 förderbare Palette,
- Fig. 7: einen ersten Teilschnitt durch die Palette entlang der Schnittlinie VII-VII in Fig. 6, und
- Fig. 8: einen zweiten Teilschnitt durch die Palette entlang der Schnittlinie VIII-VIII in Fig. 6.

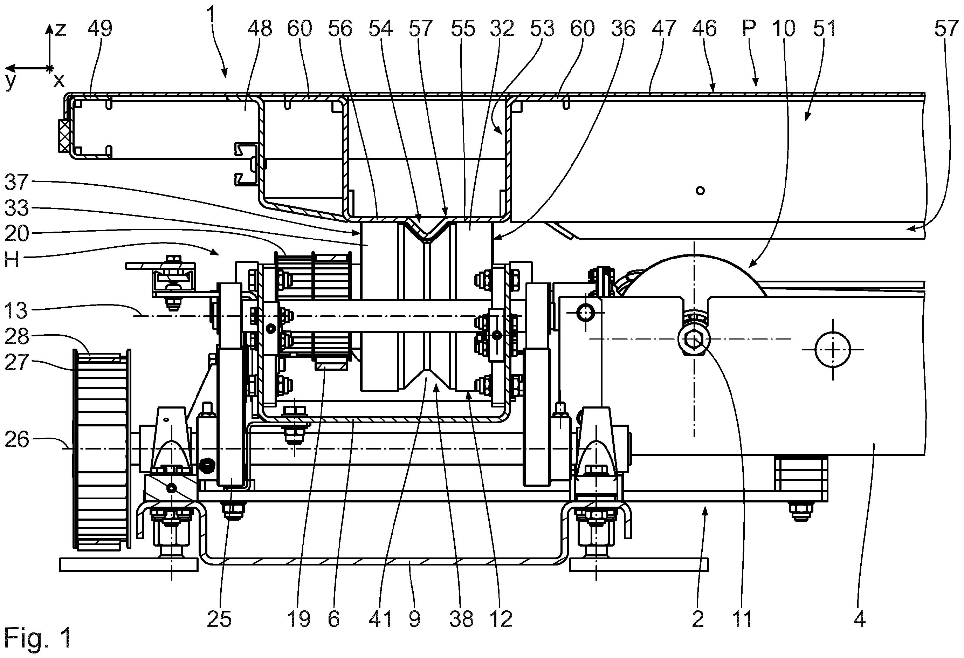

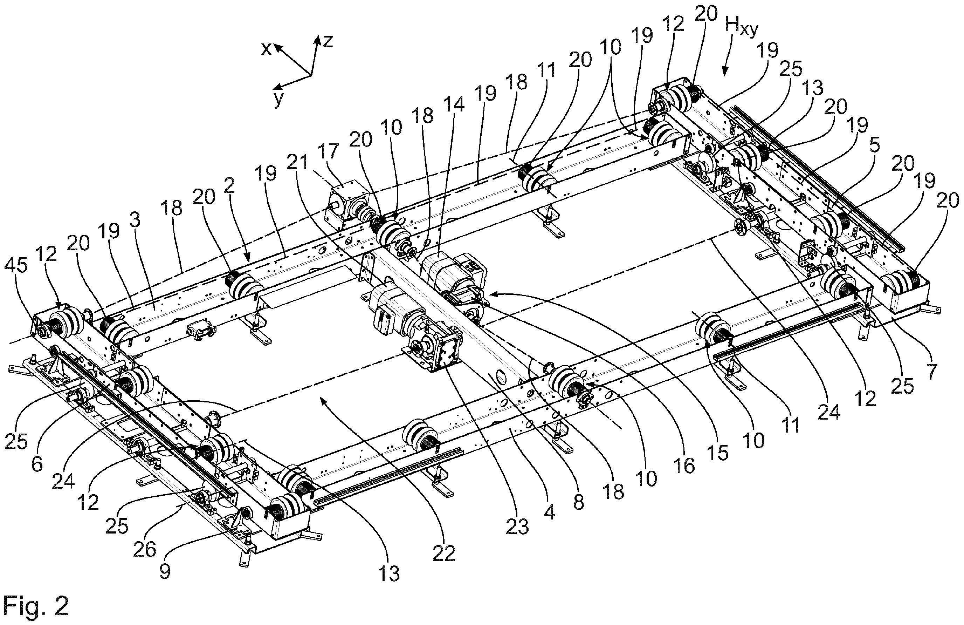

Eine Vorrichtung 1 zum Parken von Fahrzeugen umfasst Horizontal-Fördereinrichtungen H und darauf angeordnete Paletten P. Die Horizontal-Fördereinrichtungen H sind in einer horizontalen x-Richtung und an einer horizontalen und senkrecht zu der x-Richtung verlaufenden y-Richtung nebeneinander angeordnet. Vorzugsweise sind die Horizontal-Fördereinrichtungen in mehreren in einer vertikalen z-Richtung übereinanderliegenden Ebenen angeordnet, die mittels mindestens einer Vertikal-Horizontal-Fördereinrichtung miteinander verbunden sind. Die x-, y- und z-Richtung bilden ein kartesisches Koordinatensystem. Eine Anzahl der Paletten P ist kleiner als eine Anzahl der Horizontal-Fördereinrichtungen H, sodass mindestens eine Horizontal-Fördereinrichtung H frei von einer Palette P ist und so die Paletten P mittels der Horizontal-Fördereinrichtungen H verschoben und umsortiert werden können. Vorzugsweise weist die Vorrichtung 1 mindestens eine Dreh-Horizontal-Fördereinrichtung zum Drehen einer darauf angeordneten Palette P um eine vertikale Drehachse auf. Hierdurch ist ein auf einer Palette P angeordnetes Fahrzeug in einer Fahrtrichtung ausparkbar. Die Dreh-Horizontal-Fördereinrichtung ist vorzugsweise eingangsseitig oder ausgangsseitig der Vorrichtung 1 angeordnet. Fig. 1 zeigt beispielhaft eine Teilansicht einer Horizontal-Fördereinrichtung H und einer darauf angeordneten Palette P der Vorrichtung 1. Das Verschieben der Paletten P und somit das Ein- und Ausparken von Fahrzeugen wird mittels einer Steuereinrichtung gesteuert. Fig. 2 zeigt ein erstes Ausführungsbeispiel einer Horizontal-Fördereinrichtung H. Die Horizontal-Fördereinrichtung ist als Quer-und-Längs-Fördereinrichtung ausgebildet, die ein Fördern der Paletten P in der x-Richtung und der y-Richtung ermöglicht. Die Quer-und-Längs-Fördereinrichtung ist dementsprechend nachfolgend mit H_{xy} in Bezug genommen. Die x-Richtung ist nachfolgend auch als Quer-Förderrichtung und die y-Richtung als Längs-Förderrichtung bezeichnet.

Die Horizontal-Fördereinrichtung H_{xy} umfasst ein Lagergestell 2 mit zwei Längs-Lagerelementen 3, 4 und zwei Quer-Lagerelementen 5, 6. Die Längs-Lagerelemente 3, 4 verlaufen in der y-Richtung und sind in der x-Richtung voneinander beabstandet. Die Längs-Lagerelemente 3, 4 sind mittig und endseitig mit Querträgern 7, 8, 9 verbunden. Die Querträger 7, 8, 9 verlaufen in der x-Richtung und sind in der y-Richtung voneinander beabstandet. An den Querträgern 7, 9, sind endseitig der Längs-Lagerelemente 3, 4 die Quer-Lagerelemente 5, 6 angeordnet. Die Quer-Lagerelemente 5, 6 verlaufen in der x-Richtung und sind in der y-Richtung voneinander beabstandet.

An den Längs-Lagerelementen 3, 4 sind jeweils fünf Rollen 10 drehbar gelagert. Die an dem jeweiligen Längs-Lagerelement 3, 4 gelagerten Rollen 10 sind in der y-Richtung, also der Längs-Förderrichtung nacheinander angeordnet und bilden für jedes Längs-Lagerelement 3, 4 eine in der y-Richtung verlaufende Reihe aus. Die Rollen 10 weisen eine jeweils zugehörige Drehachse 11 auf, die in der x-Richtung verläuft. In entsprechender Weise sind an den Quer-Lagerelementen 5, 6 jeweils vier Rollen 12 drehbar gelagert. Die an dem jeweiligen Quer-Lagerelement 5, 6 gelagerten Rollen 12 sind in der x-Richtung, also der Quer-Förderrichtung, nacheinander angeordnet und bilden jeweils eine in der x-Richtung verlaufende Reihe aus. Die Rollen 12 weisen jeweils eine Drehachse 13 auf, die in der y-Richtung verläuft.

Die Rollen 10, 12 sind mittels eines ersten elektrischen Antriebsmotors 14 über eine erste Antriebsmechanik 15 gemeinsam drehantreibbar. Die erste Antriebsmechanik 15 umfasst zwei Verteilergetriebe 16, 17 sowie zugehörige Antriebsstangen 18, sodass ein vom Antriebsmotor 14 erzeugtes Drehmoment auf jeweils eine an den Längs-Lagerelementen 3, 4 gelagerten Rolle 10 und jeweils eine an den Quer-Lagerelementen 5, 6 gelagerte Rolle 12 übertragbar ist.

Die in der jeweiligen Reihe angeordneten Rollen 10, 12 werden von der jeweils drehangetriebenen Rolle 10, 12 über Kopplungselemente 19 drehangetrieben. Die Kopplungselemente 19 sind beispielsweise als Zahnriemen ausgebildet. Hierzu sind seitlich an den Rollen 10, 12 Zahnräder 20 angeordnet. Über die Zahnräder 20 und die Kopplungselemente 19 sind die Rollen 10, 12 einer Reihe jeweils paarweise miteinander in Drehmoment übertragender Weise gekoppelt. Die Kopplungselemente 19 sind in Fig. 2 lediglich angedeutet.

Zur Auswahl der Förderrichtung x oder y, also der Quer-Förderrichtung oder der Längs-Förderrichtung, weist die Horizontal-Fördereinrichtung H_{xy} einen zweiten elektrischen Antriebsmotor 21 auf. Der zweite Antriebsmotor 21 ist an dem Querträger 8 befestigt. Über eine zweite Antriebsmechanik 22, die ein Verteilergetriebe 23 und Antriebsstangen 24 umfasst, wirkt der zweite Antriebsmotor 21 mit Exzenterscheiben 25 zusammen. Die Exzenterscheiben 25 sind drehbar an den Querträgern 7, 9 gelagert und stützen die Quer-Lagerelemente 5, 6 ab. Durch ein Verschwenken der Exzenterscheiben 25 um zugehörige Drehachsen 26 sind die Quer-Lagerelemente 5, 6 und somit die Rollen 12 in der z-Richtung verlagerbar.

In einer ersten Schwenkposition, in der die Rollen 12 in der z-Richtung oberhalb der Rollen 10 liegen, wirkt die Horizontal-Fördereinrichtung H_{xy} als Quer-Fördereinrichtung, sodass eine Palette P in der x-Richtung förderbar ist. Dies ist in Fig. 2 gezeigt. In einer zweiten Schwenkposition, in der die Rollen 12 in der z-Richtung unterhalb der Rollen 10 liegen, wirkt die Horizontal-Fördereinrichtung H_{xy} als Längs-Fördereinrichtung, sodass eine Palette P mittels der Rollen 10 in der y-Richtung förderbar ist. Mittels der Antriebsstangen 24 wird jeweils eine der an den Querträgern 7, 9 angeordneten Exzenterscheiben 25 drehangetrieben. Die weiteren Exzenterscheiben 25, die benachbart zu der jeweils drehangetriebenen Exzenterscheibe 25 an dem Querträger 7 bzw. 9 angeordnet sind, sind mittels Zahnrädern 27 und zugehörigen Kopplungselementen 28 mit der drehangetriebenen Exzenterscheibe 25 gekoppelt. Die Kopplungselemente 28 sind beispielsweise als Zahnriemen ausgebildet.

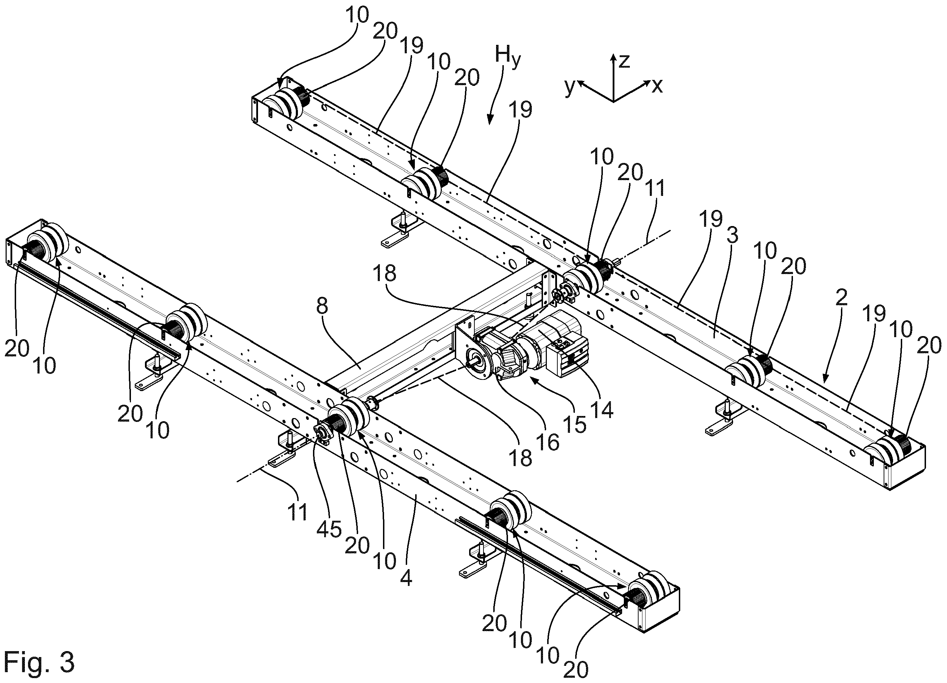

Fig. 3 zeigt ein zweites Ausführungsbeispiel der Horizontal-Fördereinrichtung H. Die Horizontal-Fördereinrichtung H ist als Längs-Fördereinrichtung ausgebildet, die ein Fördern einer Palette P ausschließlich in der y-Richtung, also der Längs-Förderrichtung ermöglicht. Dementsprechend ist die Längs-Fördereinrichtung nachfolgend mit H_{y} in Bezug genommen. Das Lagergestell 2 umfasst lediglich die Längs-Lagerelemente 3, 4. Die Längs-Lagerelemente 3, 4 sind mittels des Querträgers 8 H-förmig miteinander verbunden. Die Rollen 10 sind mittels des Antriebsmotors 14 drehantreibbar. Hinsichtlich des weiteren Aufbaus und der weiteren Funktionsweise wird auf die vorangegangene Beschreibung des vorangegangenen Ausführungsbeispiels verwiesen.

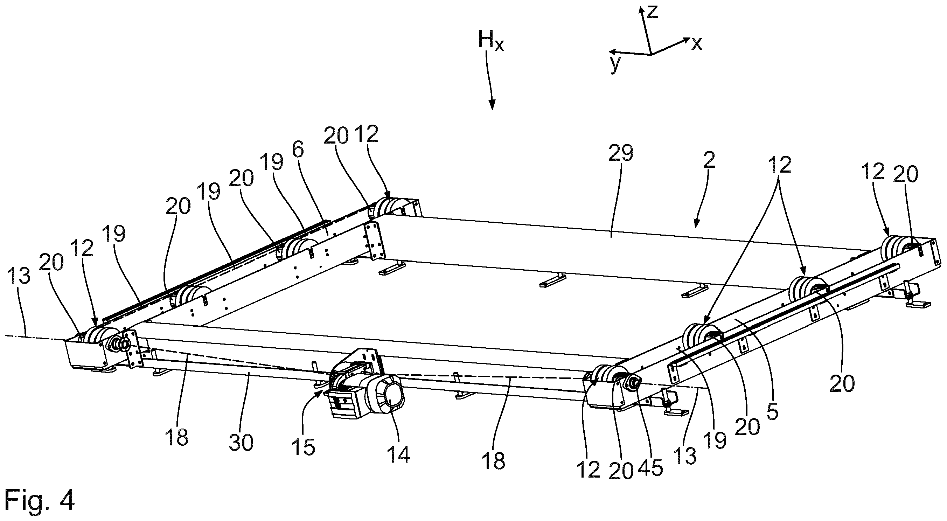

Fig. 4 zeigt ein drittes Ausführungsbeispiel der Horizontal-Fördereinrichtung H. Die Horizontal-Fördereinrichtung H ist als Quer-Fördereinrichtung ausgebildet, die ausschließlich ein Fördern einer Palette P in der x-Richtung, also der Quer-Förderrichtung, ermöglicht. Dementsprechend ist die Quer-Fördereinrichtung nachfolgend mit Hₓ in Bezug genommen. Das Lagergestell 2 umfasst lediglich die Quer-Lagerelemente 5, 6, die mittels Längsträgern 29, 30 miteinander verbunden sind. Der erste Antriebsmotor 14 ist an dem Längsträger 30 angeordnet. Die Rollen 12 sind in der oben beschriebenen Weise mittels des Antriebsmotors 14 und der Antriebsmechanik 15 um die zugehörigen Drehachsen 13 drehantreibbar, sodass eine Palette P in der x-Richtung förderbar ist. Hinsichtlich des weiteren Aufbaus und der weiteren Funktionsweise wird auf die Beschreibung der vorangegangenen Ausführungsbeispiele verwiesen.

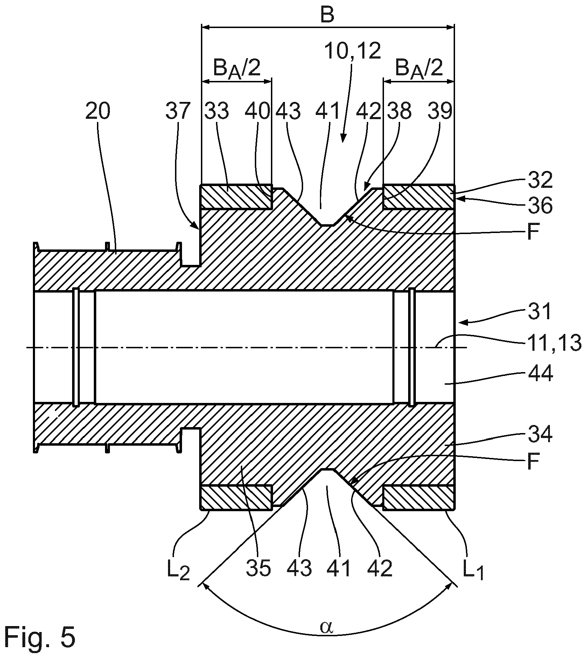

Die Rollen 10, 12 der Horizontal-Fördereinrichtungen H sind identisch ausgebildet, sodass nachfolgend lediglich eine der Rollen 10, 12 anhand von Fig. 5 beschrieben ist. Die Rolle 10, 12 weist einen Grundkörper 31 auf, an dem beidseitig Ringe 32, 33 angeordnet sind. Hierzu bildet der Grundkörper 31 zwei Zylinderabschnitte 34, 35 aus, auf denen die Ringe 32, 33 drehfest befestigt sind. Die Zylinderabschnitte 34, 35 und die zugehörigen Ringe 32, 33 bilden zusammen Abrollabschnitte 36, 37 der Rolle 10, 12 aus. In Richtung der Drehachse 11, 13 ist zwischen den Abrollabschnitten 36, 37 ein Führungsabschnitt 38 angeordnet. Der Führungsabschnitt 38 wird durch einen Mittelabschnitt des Grundkörpers 31 gebildet. Der Führungsabschnitt 38 hat einen größeren Durchmesser als die benachbarten Zylinderabschnitte 34, 35, sodass der Führungsabschnitt 38 seitlich ringförmige Anschläge 39, 40 für die Ringe 32, 33 bildet.

Der Führungsabschnitt 38 dient zum Führen einer Palette P in der jeweiligen Förderrichtung. Hierzu weist der Führungsabschnitt 38 in dem Axialschnitt gemäß Fig. 5 betrachtet ein Führungsprofil F auf, das zur Aufnahme eines Gegenprofils G der zu fördernden Palette P dient. Zur Erzeugung des Führungsprofils F ist in dem Führungsabschnitt 38 eine umlaufende Nut 41 ausgebildet.

Die Nut 41 weist zwei Führungswände 42, 43 auf, die in einem Winkel α zueinander verlaufen. Für den Winkel α gilt: 10° ≤ α ≤ 170°, insbesondere 30° ≤ α ≤ 150°, und insbesondere 60° ≤ α ≤ 120°. Die Führungswände 42, 43 bilden Führungsflächen des Führungsabschnitts 38 aus. Dadurch, dass der Grundkörper 31 aus einem metallischen Material ausgebildet ist, ist auch der Führungsabschnitt 38 an den Führungsflächen aus dem metallischen Material ausgebildet. Das metallische Material ist beispielsweise ein Stahl, insbesondere ein korrosionsbeständiger Stahl.

Die Abrollabschnitte 36, 37 dienen zum Tragen und Fördern einer Palette P. Hierzu weisen die Abrollabschnitte 36, 37 bzw. die Ringe 32, 33 einen größeren Durchmesser als der Führungsabschnitt 38 auf. Die Abrollabschnitte 36, 37 haben zusammen eine Breite B_{A}, wobei für die Breite B_{A} bezogen auf eine Breite B der jeweiligen Rolle 10, 12 gilt: 0,3 ≤ B_{A}/B ≤ 0,8, insbesondere 0,4 ≤ B_{A}/B ≤ 0,7, und insbesondere 0,5 ≤ B_{A}/B ≤ 0,6.

Die Ringe 32, 33 sind aus einem elastomeren Kunststoffmaterial ausgebildet und weisen eine Härte zwischen 87 Shore A und 97 Shore A, insbesondere zwischen 89 Shore A und 95 Shore A, und insbesondere zwischen 91 Shore A und 93 Shore A auf. Die Ringe 32, 33 sind beispielsweise aus einem Polyurethan-Elastomer und haben eine Härte von 92 Shore A. Die Ringe 32, 33 bilden zylindrische Laufflächen L₁ und L₂ der Abrollabschnitte 36, 37 aus. Die Ringe 32, 33 sind vorzugsweise auswechselbar an dem Grundkörper 31 befestigt.

Der Grundkörper 31 ist einteilig mit einem jeweiligen Zahnrad 20 ausgebildet. Der Grundkörper 31 und das Zahnrad 20 weisen eine gemeinsame Durchgangsbohrung 44 zur drehfesten Aufnahme einer zugehörigen Welle 45 auf.

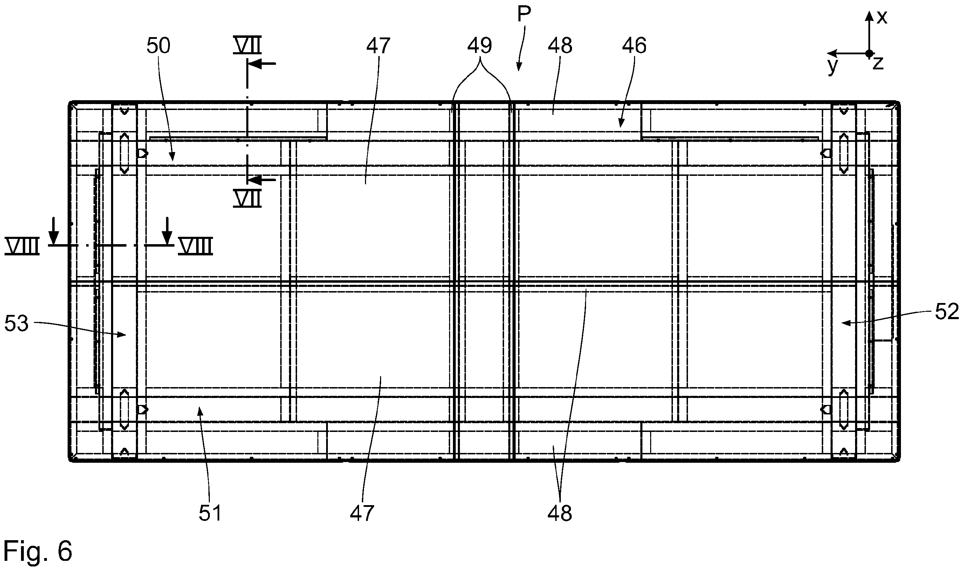

Nachfolgend ist anhand der Fig. 6 bis 8 eine mittels der Horizontal-Fördereinrichtungen H förderbare Palette P im Detail beschrieben. Die Palette P umfasst ein Tragelement 46, auf dem ein Fahrzeug abstellbar ist. Das Tragelement 46 umfasst mehrere Tragplatten 47, die an in der y-Richtung verlaufenden Längsstreben 48 und an in der x-Richtung verlaufenden Querstreben 49 befestigt und somit versteift sind. Die Längsstreben 48 und die Querstreben 49 sind an einer Unterseite der Tragplatten 47 angeordnet, sodass die Oberseite der Tragplatten 47 eine Abstellfläche bzw. Parkfläche für ein Fahrzeug ausbildet. An einer Unterseite des Tragelements 46 sind zwei Längs-Führungselemente 50, 51 und zwei Quer-Führungselemente 52, 53 an dem Tragelement 46 befestigt. Die Längs-Führungselemente 50, 51 verlaufen in der y-Richtung und sind in der x-Richtung zueinander beabstandet. Demgegenüber verlaufen die Quer-Führungselemente 52, 53 in der x-Richtung und sind in der y-Richtung zueinander beabstandet. Die Längs-Führungselemente 50, 51 und die Quer-Führungselemente 52, 53 weisen jeweils einen Gegen-Führungsabschnitt 54 und zwei Gegen-Abrollabschnitte 55, 56 auf, die beidseitig des Gegen-Führungsabschnitts 54 angeordnet sind. Der jeweilige Gegen-Führungsabschnitt 54 wirkt mit den Führungsabschnitten 38 der zugehörigen Rollen 10 bzw. 12 zur Führung der Palette P in der x- oder der y-Richtung zusammen. Entsprechend wirken die Gegen-Abrollabschnitte 55, 56 mit den Abrollabschnitten 36, 37 der zugehörigen Rollen 10, 12 zum Tragen und Fördern der Palette P zusammen.

Die Längs-Führungselemente 50, 51 und die Quer-Führungselemente 52, 53 sind im Grundsatz identisch aufgebaut, sodass nachfolgend lediglich eines der Führungselemente im Detail beschrieben ist. Der Gegen-Führungsabschnitt 54 weist in einem Axialschnitt betrachtet ein Gegenprofil G auf, das negativ zu dem Führungsprofil F ausgebildet ist und zur Aufnahme des Führungsprofils F dient. In dem Gegen-Führungsabschnitt 54 ist dementsprechend ein Vorsprung 57 ausgebildet, der geradlinig in der jeweiligen Förderrichtung verläuft. Der Vorsprung 57 weist Gegen-Führungswände 58, 59 auf, die in einem Winkel α' zueinander verlaufen. Für den Winkel α' gilt: 10° ≤ α' ≤ 170°, insbesondere 30° ≤ α' ≤ 150°, und insbesondere 60° ≤ α' ≤ 120°. Der Vorsprung 57 ist in seiner Höhe und Breite sowie in seiner Form der Nut 41 angepasst.

Die Gegen-Abrollabschnitte 55, 56 sind eben ausgebildet und verlaufen in der jeweiligen Förderrichtung. Senkrecht zu der Förderrichtung haben die Gegen-Abrollabschnitte 55, 56 eine Breite, die mindestens gleich der Breite B_{A}/2 des zugehörigen Abrollabschnitts 36, 37 ist. Die Gegen-Abrollabschnitte 55, 56 sind über im Querschnitt L-förmige Befestigungsabschnitte 60 an dem Tragelement 46 befestigt.

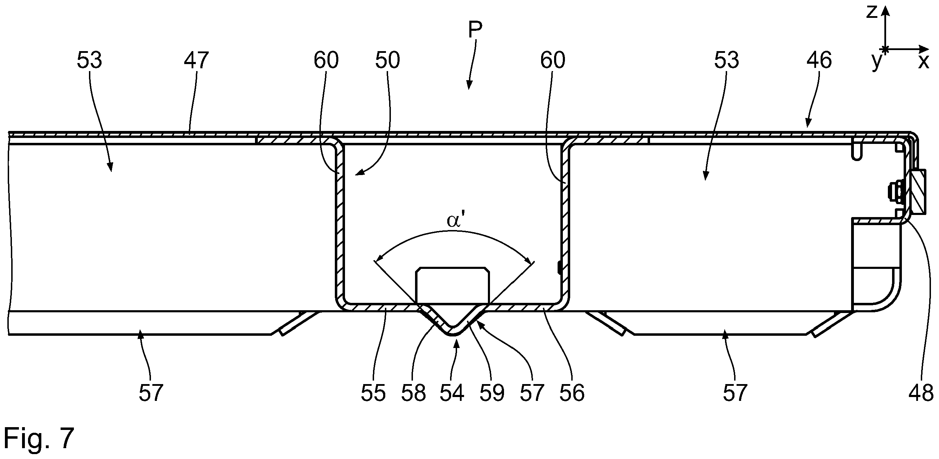

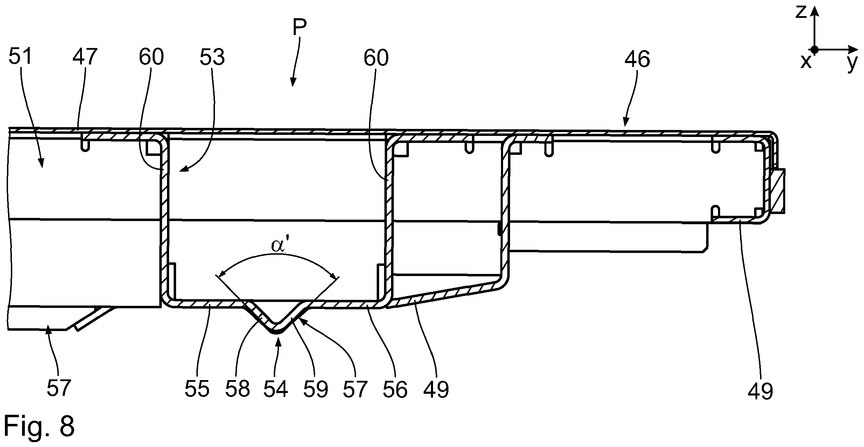

Die Vorsprünge 57 der Quer-Führungselemente 52, 53 sind im Bereich der Längs-Führungselemente 50, 51 unterbrochen. Dies ist in Fig. 7 veranschaulicht. Die Vorsprünge 57 der Längs-Führungselemente 50, 51 verlaufen bis zu den Quer-Führungselementen 52, 53. Dies ist in Fig. 8 veranschaulicht.

Die Längs-Führungselemente 50, 51 und die Quer-Führungselemente 52, 53 sind aus einem metallischen Material ausgebildet. Das metallische Material ist beispielsweise ein Stahl, insbesondere ein korrosionsbeständiger Stahl.

Die Funktionsweise der Vorrichtung 1 ist wie folgt:
Auf der Parkfläche einer freien Palette P wird von einem Benutzer ein Fahrzeug abgestellt. Die Palette P mit dem Fahrzeug wird anschließend mittels mindestens einer der Horizontal-Fördereinrichtungen H verschoben. Hierzu liegt die Palette P je nach gewünschter Förderrichtung mit den Gegen-Abrollabschnitten 54, 55 der Längs-Führungselemente 50, 51 oder der Quer-Führungselemente 52, 53 auf den Abrollabschnitten 36, 37 der Rollen 10 oder der Rollen 12. Durch Drehantreiben der Rollen 10 bzw. der Rollen 12 wird die Palette P in der Längs-Förderrichtung oder der Quer-Förderrichtung gefördert und gleichzeitig mittels der in den Nuten 41 der Rollen 10 bzw. der Rollen 12 verlaufenden Vorsprünge 57 seitlich geführt. Bei der Horizontal-Fördereinrichtung H_{xy} erfolgt ein Umschalten zwischen der Quer-Förderrichtung und der Längs-Förderrichtung durch Betätigung des zweiten Antriebsmotors 21 und dem Verschwenken der Exzenterscheiben 25.

Durch die Rollen 10, 12 und die Längs-Führungselemente 50, 51 bzw. die Quer-Führungselemente 52, 53 ist ein verschleiß- und wartungsarmes Fördern der jeweiligen Palette P möglich. Dadurch, dass das Tragelement 46 der jeweiligen Palette P separat von den Längs-Führungselementen 50, 51 bzw. Quer-Führungselementen 52, 53 ausgebildet ist, kann das Tragelement 46 gewichtsoptimiert ausgebildet werden, wohingegen die Längs-Führungselemente 50, 51 bzw. die Quer-Führungselemente 52, 53 verschleißoptimiert ausgebildet werden können. Durch die sichere Führung der jeweiligen Palette P liegt diese sicher auf dem mindestens einen Abrollabschnitt 36, 37 der Rollen 10 bzw. der Rollen 12 auf, sodass ein im Wesentlichen schlupffreies Fördern der jeweiligen Palette P möglich ist. Hierdurch ist das Fördern der jeweiligen Palette P schnell und energieeffizient.

## Patentansprüche

1. Horizontal-Fördereinrichtung zum Tragen und Fördern einer Palette zum Parken eines Fahrzeuges mit
- mindestens einem Lagerelement (3, 4, 5, 6),
- mehreren Rollen (10, 12) zum Fördern und Tragen einer Palette (P),
-- die in einer Förderrichtung (x, y) nacheinander an dem mindestens einen Lagerelement (3, 4, 5, 6) drehbar gelagert sind und
-- die mindestens zwei quer zu der Förderrichtung (x, y) beabstandete Reihen ausbilden,
- mindestens einem elektrischen Antriebsmotor (14) zum Drehantreiben der Rollen (10, 12), wobei die Rollen (10, 12) jeweils einen Führungsabschnitt (38) zum Führen der Palette (P) und mindestens einen seitlich des Führungsabschnitts (38) angeordneten Abrollabschnitt (36, 37) zum Tragen und Fördern der Palette (P) aufweisen,
wobei der Führungsabschnitt (38) mindestens zwei Führungswände (42, 43) aufweist, **dadurch gekennzeichnet dass** die Führungswände (42, 43) in einem Winkel α zueinander verlaufen, wobei gilt: 10° ≤ α ≤ 170°,
**dass** der Führungsabschnitt (38) an zugehörigen Führungsflächen aus einem metallischen Material ausgebildet ist, und
**dass** der mindestens eine Abrollabschnitt (36, 37) an einer Lauffläche (L₁, L₂) aus einem Kunststoffmaterial gebildet ist.

2. Horizontal-Fördereinrichtung nach Anspruch 1, **dadurch gekennzeichnet,**
**dass** die Rollen (10, 12) jeweils zwei Abrollabschnitte (36, 37) aufweisen, die beidseitig des Führungsabschnitts (38) angeordnet sind.

3. Horizontal-Fördereinrichtung nach Anspruch 1 oder 2, **dadurch gekennzeichnet,**
**dass** der mindestens eine Abrollabschnitt (36, 37) einen Grundkörper (31) und jeweils einen an dem Grundkörper (31) angeordneten Ring (32, 33) aufweist.

4. Horizontal-Fördereinrichtung nach Anspruch 3, **dadurch gekennzeichnet,**
**dass** der jeweilige Ring (32, 33) an der Lauffläche (L₁, L₂) aus dem Kunststoffmaterial, insbesondere einem elastomeren Kunststoffmaterial ausgebildet ist.

5. Horizontal-Fördereinrichtung nach einem der Ansprüche 1 bis 4,
**dadurch gekennzeichnet,**
**dass** der mindestens eine Abrollabschnitt (36, 37), insbesondere der jeweilige Ring (32, 33), an der Lauffläche (L₁, L₂) eine Härte zwischen 87 Shore A und 97 Shore A, insbesondere zwischen 89 Shore A und 95 Shore A, und insbesondere zwischen 91 Shore A und 93 Shore A aufweist.

6. Horizontal-Fördereinrichtung nach einem der Ansprüche 1 bis 5,
**dadurch gekennzeichnet,**
**dass** der mindestens eine Abrollabschnitt (36, 37) insgesamt eine Breite B_{A} aufweist und bezogen auf eine Breite B der jeweiligen Rolle (10, 12) gilt: 0,3 ≤ B_{A}/B ≤ 0,8, insbesondere 0,4 ≤ B_{A}/B ≤ 0,7, und insbesondere 0,5 ≤ B_{A}/B ≤ 0,6.

7. Horizontal-Fördereinrichtung nach einem der Ansprüche 1 bis 6,
**dadurch gekennzeichnet,**
**dass** der Führungsabschnitt (38) in einem Axialschnitt ein Führungsprofil (F) zur Aufnahme eines Gegenprofils (G) der zu fördernden Palette (P) aufweist.

8. Horizontal-Fördereinrichtung nach einem der Ansprüche 1 bis 7,
**dadurch gekennzeichnet,**
**dass** für den Winkel α gilt: 30° ≤ α ≤ 150°, und insbesondere 60° ≤ α ≤ 120°.

9. Horizontal-Fördereinrichtung nach einem der Ansprüche 1 bis 8,
**dadurch gekennzeichnet,**
**dass** in dem Führungsabschnitt (38) eine umlaufende Nut (41) ausgebildet ist.

10. Palette für eine Horizontal-Fördereinrichtung nach einem der Ansprüche 1 bis 9 mit
einem Tragelement (46) zum Parken eines Fahrzeuges und mindestens zwei Führungselementen (50, 51, 52, 53), wobei
- die mindestens zwei Führungselemente (50, 51, 52, 53) jeweils einen Gegen-Führungsabschnitt (54) und mindestens einen seitlich des Gegen-Führungsabschnitts (54) angeordneten Gegen-Abrollabschnitt (55, 56) für Rollen (10, 12) der Horizontal-Fördereinrichtung (H) aufweisen, und
- der jeweilige Gegen-Führungsabschnitt (54) mindestens zwei Gegen-Führungswände aufweist, die in einem Winkel α' zueinander verlaufen, wobei gilt: 10° ≤ α' ≤ 170°,
**dadurch gekennzeichnet,**
**dass** die mindestens zwei Führungselemente (50, 51, 52, 53) quer zu einer Förderrichtung (x, y) beabstandet an dem Tragelement (46) befestigt und separat von dem Tragelement (46) ausgebildet sind.

11. Palette nach Anspruch 10, **dadurch gekennzeichnet,**
**dass** die Führungselemente (50, 51, 52, 53) jeweils zwei Gegen-Abrollabschnitte (55, 56) aufweisen, die beidseitig des Gegen-Führungsabschnitts (54) angeordnet sind.

12. Palette nach Anspruch 10 oder 11, **dadurch gekennzeichnet,**
**dass** der Gegen-Führungsabschnitt (54) in einem Axialschnitt ein Gegenprofil (G) zur Aufnahme eines Führungsprofils (F) der Rollen (10, 12) aufweist.

13. Palette nach einem der Ansprüche 10 bis 12, **dadurch gekennzeichnet,**
**dass** die Führungselemente (50, 51, 52, 53) aus einem metallischen Material sind.

14. Palette nach einem der Ansprüche 10 bis 13, **dadurch gekennzeichnet,**
**dass** in dem Gegen-Führungsabschnitt (54) ein in der Förderrichtung (x, y) verlaufender Vorsprung (57) ausgebildet ist.

15. Vorrichtung zum Parken von Fahrzeugen mit
- mindestens einer Horizontal-Fördereinrichtung (H) nach einem der Ansprüche 1 bis 9 und
- mindestens einer Palette (P) mit einem Tragelement (46) zum Parken eines Fahrzeuges, wobei
-- mindestens zwei Führungselemente (50, 51, 52, 53) quer zu einer Förderrichtung (x, y) beabstandet an dem Tragelement (46) befestigt sind und
-- die mindestens zwei Führungselemente (50, 51, 52, 53) jeweils einen Gegen-Führungsabschnitt (54) und mindestens einen seitlich des Gegen-Führungsabschnitts (54) angeordneten Gegen-Abrollabschnitt (55, 56) für Rollen (10, 12) der Horizontal-Fördereinrichtung (H) aufweisen.

## Claims

1. Horizontal conveying device for carrying and conveying a pallet for the parking of a vehicle, comprising
- at least one bearing element (3, 4, 5, 6),
- a plurality of rollers (10, 12) for conveying and carrying a pallet (P),
-- which, in a direction of conveyance (x, y), are rotatably mounted one after another on the at least one bearing element (3, 4, 5, 6), and
-- which form at least two rows that are distanced apart transversely to the direction of conveyance (x, y),
- at least one electric drive motor (14) for the rotational driving of the rollers (10, 12), wherein the rollers (10, 12) respectively have a guide portion (38) for guiding the pallet (P) and at least one rolling portion (36, 37), arranged alongside the guide portion (38), for carrying and conveying the pallet (P),
wherein the guide portion (38) has at least two guide walls (42, 43), **characterized**
**in that** the guide walls (42, 43) run at an angle α to one another, wherein: 10° ≤ α ≤ 170° obtains,
**in that** the guide portion (38), on associated guide surfaces, is formed of a metallic material, and
**in that** the at least one rolling portion (36, 37), on a running surface (L₁, L₂), is formed of a plastics material.

2. Horizontal conveying device according to Claim 1, **characterized in that** the rollers (10, 12) respectively have two rolling portions (36, 37), which are arranged on both sides of the guide portion (38).

3. Horizontal conveying device according to Claim 1 or 2, **characterized in that** the at least one rolling portion (36, 37) has a main body (31) and respectively a ring (32, 33) arranged on the main body (31).

4. Horizontal conveying device according to Claim 3, **characterized in that** the respective ring (32, 33), on the running surface (L₁, L₂), is formed of the plastics material, in particular an elastomeric plastics material.

5. Horizontal conveying device according to one of Claims 1 to 4, **characterized**
**in that** the at least one rolling portion (36, 37), in particular the respective ring (32, 33), has on the running surface (L₁, L₂) a hardness between 87 Shore A and 97 Shore A, in particular between 89 Shore A and 95 Shore A, and in particular between 91 Shore A and 93 Shore A.

6. Horizontal conveying device according to one of Claims 1 to 5, **characterized**
**in that** the at least one rolling portion (36, 37) has in total a width B_{A} and, related to a width B of the respective roller (10, 12): 0.3 ≤ B_{A}/B ≤ 0.8, in particular 0.4 ≤ B_{A}/B ≤ 0.7, and in particular 0.5 ≤ B_{A}/B ≤ 0.6, obtains.

7. Horizontal conveying device according to one of Claims 1 to 6, **characterized**
**in that** the guide portion (38) has in an axial section a guide profile (F) for receiving a counter profile (G) of the pallet (P) to be conveyed.

8. Horizontal conveying device according to one of Claims 1 to 7, **characterized**
**in that** for the angle α: 30° ≤ α ≤ 150°, and in particular 60° ≤ α ≤ 120°, obtains.

9. Horizontal conveying device according to one of Claims 1 to 8, **characterized**
**in that** in the guide portion (38) is configured a circumferential groove (41).

10. Pallet for a horizontal conveying device according to one of Claims 1 to 9, comprising a load-bearing element (46), for the parking of a vehicle, and at least two guide elements (50, 51, 52, 53), wherein
- the at least two guide elements (50, 51, 52, 53) respectively have a counter guide portion (54) and at least one counter rolling portion (55, 56), arranged alongside the counter guide portion (54), for rollers (10, 12) of the horizontal conveying device (H), and
- the respective counter guide portion (54) has at least two counter guide walls, which run at an angle α' to one another, wherein: 10° ≤ α' ≤ 170° obtains,
**characterized**
**in that** the at least two guide elements (50, 51, 52, 53), at a distance apart transversely to a direction of conveyance (x, y), are fastened to the load-bearing element (46) and configured separate from the load-bearing element (46).

11. Pallet according to Claim 10, **characterized**
**in that** the guide elements (50, 51, 52, 53) respectively have two counter rolling portions (55, 56), which are arranged on both sides of the counter guide portion (54).

12. Pallet according to Claim 10 or 11, **characterized in that** the counter guide portion (54), in an axial section, has a counter profile (G) for receiving a guide profile (F) of the rollers (10, 12).

13. Pallet according to one of Claims 10 to 12, **characterized in that** the guide elements (50, 51, 52, 53) are made of a metallic material.

14. Pallet according to one of Claims 10 bis 13, **characterized in that** in the counter guide portion (54) is configured a projection (57) running in the direction of conveyance (x, y).

15. Apparatus for the parking of vehicles, comprising
- at least one horizontal conveying device (H) according to one of Claims 1 to 9, and
- at least one pallet (P) having a load-bearing element (46) for the parking of a vehicle, wherein
-- at least two guide elements (50, 51, 52, 53), at a distance apart transversely to a direction of conveyance (x, y), are fastened to the load-bearing element (46), and
-- the at least two guide elements (50, 51, 52, 53) respectively have a counter guide portion (54) and at least one counter rolling portion (55, 56), arranged alongside the counter guide portion (54), for rollers (10, 12) of the horizontal conveying device (H).

## Revendications

1. Convoyeur horizontal destiné à porter et transporter une palette de stationnement de véhicule, comportant
- au moins un élément de palier (3, 4, 5, 6),
- plusieurs rouleaux (10, 12) destinés à transporter et à porter une palette (P),
-- lesquels sont montés en rotation l'un après l'autre dans une direction de transport (x, y), au niveau de l'au moins un élément de palier (3, 4, 5, 6), et
-- lesquels forment au moins deux rangées espacées transversalement par rapport à la direction de transport (x, y),
- au moins un moteur d'entraînement électrique (14) destiné à entraîner les rouleaux (10, 12) en rotation, les rouleaux (10, 12) présentant chacun une section de guidage (38) destinée à guider la palette (P) et au moins une section de déroulement (36, 37) disposée latéralement par rapport à la section de guidage (38), destinée à porter et à transporter la palette (P),
dans lequel la section de guidage (38) comporte au moins deux parois de guidage (42, 43), **caractérisé en ce que** les parois de guidage (42, 43) s'étendent l'une par rapport à l'autre selon un angle α, où :
10°≤ α ≤ 170°,
**en ce que** la section de guidage (38) au niveau de surfaces de guidage correspondantes est réalisée à partir d'un matériau métallique, et
**en ce que** l'au moins une section de déroulement (36, 37) au niveau d'une surface de roulement (L₁, L₂) est formée à partir d'un matériau plastique.

2. Convoyeur horizontal selon la revendication 1, **caractérisé en ce que** les rouleaux (10, 12) comportent chacun deux sections de déroulement (36, 37) qui sont disposées des deux côtés de la section de guidage (38).

3. Convoyeur horizontal selon la revendication 1 ou 2, **caractérisé en ce que** l'au moins une section de déroulement (36, 37) comporte un corps de base (31) et respectivement un anneau (32, 33) disposé sur le corps de base (31).

4. Convoyeur horizontal selon la revendication 3, **caractérisé en ce que** l'anneau respectif (32, 33) au niveau de la surface de roulement (L₁, L₂) est réalisé à partir du matériau plastique, en particulier à partir d'un matériau plastique élastomère.

5. Convoyeur horizontal selon l'une des revendications 1 à 4, **caractérisé en ce que** l'au moins une section de déroulement (36, 37), en particulier l'anneau respectif (32, 33) sur la surface de roulement (L₁, L₂) présente une dureté comprise entre 87 Shore A et 97 Shore A, en particulier entre 89 Shore A et 95 Shore A, et particulièrement entre 91 Shore A et 93 Shore A.

6. Convoyeur horizontal selon l'une des revendications 1 à 5, **caractérisé en ce que** l'au moins une section de déroulement (36, 37) présente globalement une largeur B_{A} et, par rapport à une largeur B du rouleau respectif (10, 12), il s'applique ce qui suit :
0,3 ≤ B_{A}/B ≤ 0,8, en particulier 0,4 ≤ B_{A}/B ≤ 0,7, et particulièrement
0,5 ≤ B_{A}/B ≤ 0,6.

7. Convoyeur horizontal selon l'une des revendications 1 à 6, **caractérisé en ce que** la section de guidage (38) comporte en section axiale un profil de guidage (F) destiné à recevoir un contre-profil (G) de la palette (P) à transporter.

8. Convoyeur horizontal selon l'une des revendications 1 à 7, **caractérisé en ce que,** pour l'angle α, il s'applique ce qui suit :
30° ≤ α ≤ 150°, et en particulier 60° ≤ α ≤ 120°.

9. Convoyeur horizontal selon l'une des revendications 1 à 8, **caractérisé en ce qu'**une rainure circulaire (41) est réalisée dans la section de guidage (38).

10. Palette pour un convoyeur horizontal selon l'une des revendications 1 à 9, comportant un élément de support (46) destiné au stationnement d'un véhicule, et au moins deux éléments de guidage (50, 51, 52, 53), dans laquelle
- les au moins deux éléments de guidage (50, 51, 52, 53) comportent chacun une contre-section de guidage (54) et au moins une contre-section de déroulement (55, 56) pour des rouleaux (10, 12) du convoyeur horizontal (H), disposée latéralement par rapport à la contre-section de guidage (54), et
- la contre-section de guidage (54) respective comporte au moins deux contre-parois de guidage qui s'étendent l'une par rapport à l'autre selon un angle α', où :
10°≤ α' ≤ 170°,
**caractérisée en ce que** les au moins deux éléments de guidage (50, 51, 52, 53) sont fixés de façon espacée sur l'élément de support (46), transversalement par rapport à une direction de transport (x, y), et réalisés séparément de l'élément de support (46).

11. Palette selon la revendication 10, **caractérisée en ce que** les éléments de guidage (50, 51, 52, 53) comportent chacun deux contre-sections de déroulement (55, 56) qui sont disposés des deux côtés de la contre-section de guidage (54).

12. Palette selon la revendication 10 ou 11, **caractérisée en ce que** la contre-section de guidage (54) comporte, dans une section axiale, un contre-profil (G) destiné à recevoir un profil de guidage (F) des rouleaux (10, 12).

13. Palette selon l'une des revendications 10 à 12, **caractérisée en ce que** les éléments de guidage (50, 51, 52, 53) sont réalisés en un matériau métallique.

14. Palette selon l'une des revendications 10 à 13, **caractérisée en ce que,** dans la contre-section de guidage (54), une saillie (57) s'étendant dans la direction de transport (x, y) est réalisée.

15. Dispositif destiné au stationnement de véhicules, comportant
- au moins un convoyeur horizontal (H) selon l'une des revendications 1 à 9, et
- au moins une palette (P) comportant un élément de support (46), pour le stationnement d'un véhicule, dans lequel
-- au moins deux éléments de guidage (50, 51, 52, 53) sont fixés de façon espacée sur l'élément de support (46), transversalement par rapport à une direction de transport (x, y), et
-- les au moins deux éléments de guidage (50, 51, 52, 53) comportent chacun une contre-section de guidage (54) et au moins une contre-section de déroulement (55, 56) pour des rouleaux (10, 12) du convoyeur horizontal (H), disposée latéralement par rapport à la contre-section de guidage (54).
